Europäisches Patentamt

European Patent Office

Office européen des brevets

(11) Publication number: **0 099 216**
**B1**

(12) **EUROPEAN PATENT SPECIFICATION**

(45) Date of publication of patent specification: **04.06.86**

(51) Int. Cl.⁴: **B 60 R 1/02**

(21) Application number: **83303863.1**

(22) Date of filing: **01.07.83**

(54) **Rear view mirror.**

(30) Priority: **08.07.82 GB 8219825**

(43) Date of publication of application:
**25.01.84 Bulletin 84/04**

(45) Publication of the grant of the patent:
**04.06.86 Bulletin 86/23**

(84) Designated Contracting States:
**DE FR GB IT**

(56) References cited:
**DE-C- 915 538**
**DE-U-8 122 083**
**FR-A-2 180 177**
**GB-A-1 532 065**

(73) Proprietor: **BRITAX (WINGARD) LIMITED**
**Chandler Road**
**Chichester West Sussex PO19 2UG (GB)**

(72) Inventor: **Bottrill, John**
**"Moelfre" 9 Langdale Avenue**
**Chichester West Sussex (GB)**

(74) Representative: **Hollinghurst, Antony**
**Britax Division (Patents) Kingsham Road**
**Chichester West Sussex PO19 2UG (GB)**

Courier Press, Leamington Spa, England.

# Description

This invention relates to rear view mirrors for motor vehicles and has particular application to rear view mirrors of the type in which the mirror is adjusted by adjusting the orientation of the reflective member within the housing. The invention has a particular, but not exclusive application to mirrors for commercial vehicles where the reflective member is too large to be conveniently supported from a single central mounting without the provision of a rigid backing plate.

According to the invention, a rear view mirror for a motor vehicle comprises a housing arranged to be mounted on the vehicle body, a reflective member, and support means for supporting the reflective member in the housing, the support means including at least one support member secured to the edge of the reflective member and having resilient means in sliding engagement with a side wall of the housing confronting said edge, and variable means, adjustable from outside the housing, for varying the force necessary to cause sliding movement of the support member relative to the housing.

The variable means may be separate from the resilient means and preferably takes the form of a semi-rigid strip having an elongate slot therein together with a screw extending through a hole in the case and through said slot into a tapped hole in a clamping member so as to clamp the strip against the inner surface of the housing with a force which can be varied by rotating the screw.

In one form of the invention four such support members are provided, one located adjacent to each of the four corners of the reflective member. When the mirror is to be adjusted manually, an abutment member preferably protrudes from the central region of the inside of the back of the case into contact with the back of the reflective member. Adjustment is then effected by pressing inwards on the appropriate corner of the reflective member which then pivots on the abutment member so that the opposite corner moves towards the front of the case.

Where the invention is to be applied to a remote control mirror, the remote control mechanism may be mounted centrally in the case in place of the above mentioned abutment member and the support members in accordance with the invention then merely serve to steady the outer periphery of the reflective member. This enables an adjustment mechanism intended for a small mirror for a private car to be used with large commercial vehicle mirrors.

Two embodiments of the invention will now be described, by way of example, with reference to the accompanying drawings, in which:

Figure 1 is a front elevational view of a manually adjustable mirror in accordance with the invention,

Figure 2 is a cross-sectional view taken on the line 2—2 in Figure 1,

Figure 3 is a fragmentary cross-sectional view on an enlarged scale, showing one of the support members in accordance with the invention,

Figure 4 is a fragmentary plan view of the support member shown in Figure 3, and

Figure 5 is a cross-sectional view, similar to Figure 2, but showing a remote control mirror.

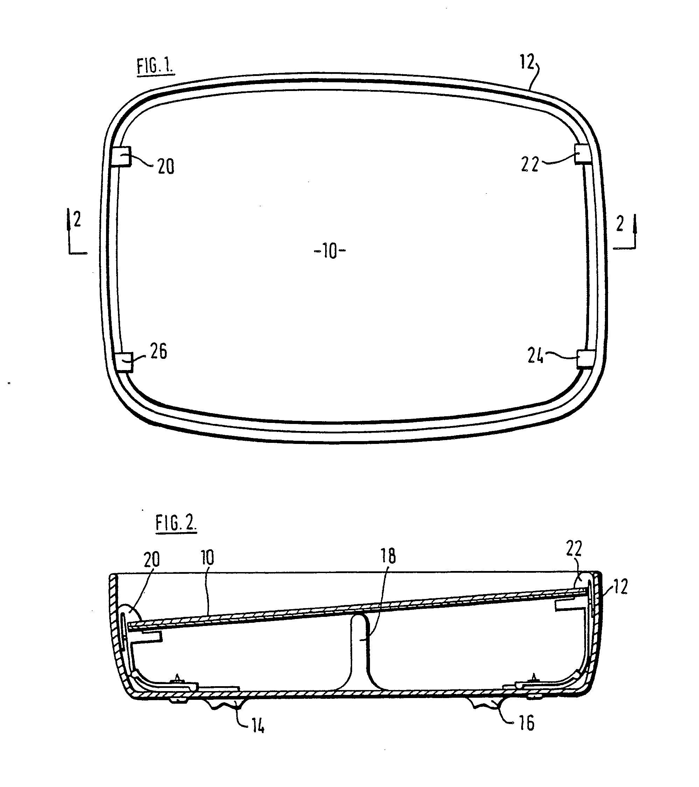

Referring to Figures 1 and 2, a rear view mirror comprises a reflective member 10 mounted in a housing 12 which has attachment points 14 and 16, whereby it may be mounted on a motor vehicle. The housing 12 has a centrally located sprue 18 secured to the central region of its inner surface and projecting into abutment with the back of the reflective member 10.

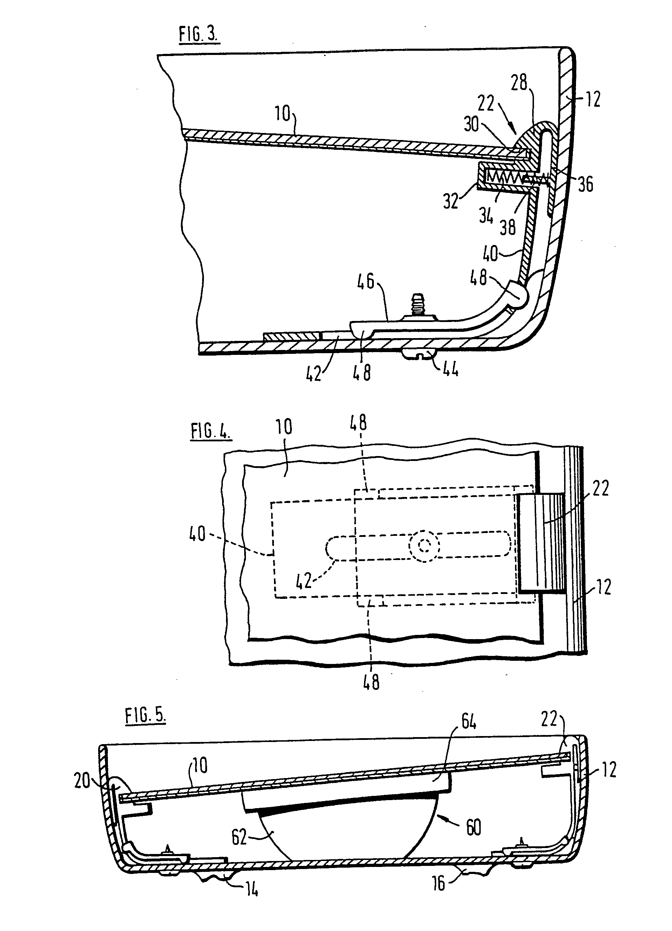

In accordance with the invention, respective support members 20, 22, 24 and 26 are secured to the reflective member 10 adjacent to each of the four corners thereof. Figures 3 and 4 show the support member 22 in more detail. As can best be seen in Figure 3, the support member 22 comprises of a plastics body 28 having a groove 30 for engagement round the edge of the reflective member 10 and a pocket 32 for a compression spring 34 located behind the reflective member 10. An integral flexible fin 36 is attached to the outer edge of the support member 28 and carries a stud 38 which engages with the other end of the compression spring 34 so that the fin 36 is resiliently urged into contact with the inner surface of the side wall of the housing 12 thereby to central centralise the reflective member 10.

An integral flexible strap 40 projects from the body of the support member 22 on the opposite side of the pocket 32 from the reflective member 10 and curves round so as to lie against the inner surface of the back of the housing 12. The strap 40 has an elongate slot 42. A screw 44 projects through a hole in the back of the housing 12 and through the slot 42 into a tapped hole in a steel clamping member 46. the clamping member 46 has ears 48 at each of its ends which embrace the sides of the strip 40 and help to maintain mutual alignment.

In use, the screw 44 is adjusted so that the clamping strip 46 exerts such a force that it is just possible to push the strip 40 along under the clamping member 46, by pressing down on the body 28. The screws 44 of the other support members 20, 24 and 26 are similarly adjusted. Thus, the orientation of the reflective member 10 can be adjusted by pressing on the appropriate corner thereof and the four support members 20, 22, 24 and 26 hold it in the position in which it is set.

The mirror illustrated in Figure 5 is similar in many respects to that illustrated in Figures 1 to 4 and the same reference numerals are used for corresponding parts, which will not be described in detail. However, the sprue 18 is replaced by a remote control mirror mechanism 60 which consists of a part-spherical body 62 mounted on the inside of the housing 12 and a mirror carrier 64 on which the reflected member 10 is mounted. Movement between the body 62 and the carrier 64 may be effected either electrically or mechanically using any suitable known mechanism.

## Claims

1. A rear view mirror for a motor vehicle comprising a housing (12) arranged to be mounted on the vehicle body, a reflective member (10), and support means for supporting the reflective member (10) in the housing, characterised in that the support means include at least one support member (20, 22, 24, 26) secured to the edge of the reflective member (10) and having resilient means (34, 36) in sliding engagement with a side wall of the housing (12) confronting said edge, and variable means (44, 46), adjustable from outside the housing (12), for varying the force necessary to cause sliding movement of the support member (22) relative to the housing (12).

2. A mirror according to claim 1, characterised in that the variable means comprises a semi-rigid strip (40) having an elongate slot (42) therein together with a screw (44) extending through a hole in the case (12) and through said slot (42) into a tapped hole in a clamping member (46) so as to clamp the strip (40) against the inner surface of the housing (12).

3. A mirror according to claim 1 or 2, characterised by a quadrangular reflective member (10) and by four of said support members (20, 22, 24, 26), one located adjacent to each of the four corners of the reflective member (10).

4. A mirror according to claim 1, 2 or 3, chracterised in that an abutment member (18) protrudes from the central region of the inside of the back of the housing (12) into contact with the back of the reflective member (10).

5. A mirror according to claim 1, 2 or 3, characterised in that a remote control mechanism (60) is mounted centrally on the inside of the back of the housing (12).

## Revendications

1. Un rétroviseur pour voiture automobile comprenant un boîtier (12) destiné à être monté sur la carosserie du véhicule, un élément réfléchissant (10), et des moyens de support pour supporter l'élément réfléchissant (10) dans le boîtier, caractérisé en ce que les moyens de support comprennent au moins un élément de support fixé au bord de l'élément réfléchissant (10) et ayant des moyens à ressort (34, 36) en prise coulissante avec une paroi latérale du boîtier (12) faisant face audit bord, et des moyens réglables (44, 46) ajustables de l'extérieur du boîtier (12), pour faire varier la force nécessaire pour assurer le coulissement de l'élément de support (22) par rapport au boîtier (12).

2. Un rétroviseur selon la revendication 1, caractérisé en ce que les moyens réglables comprennent une plaque semi-rigide (40) à l'intérieur de laquelle est ménagée une fente allongée (42) avec une vis (44) traversant un trou ménagé dans le boîtier (12) et ladite fente (42) pour déboucher dans un orifice taraudé ménagé dans un élément de serrage (46) afin de bloquer la bande (40) contre la surface interne du boîtier (12).

3. Un rétroviseur selon l'une quelconque des revendications 1 et 2, caractérisé en ce qu'il comporte un élément réfléchissant quadrangulaire (10) et quatre éléments de support (20, 22, 24, 26), un élément étant monté adjacent à chacun des quatre coins de l'élément réfléchissant (10).

4. Un rétroviseur selon l'une quelconque des revendications 1 à 3, caractérisé en ce qu'un élément de butée (18) fait saillie au milieu de la face interne de l'arrière du boîtier (12) qui est en contact avec l'arrière de l'élément réfléchissant (10).

5. Un rétroviseur selon l'une quelconque des revendications 1 à 3, caractérisé en ce qu'un mécanisme de commande à distance (60) est monté au centre sur la face interne de l'arrière du boîtier (12).

## Patentansprüche

1. Rückspiegel für ein Kraftfahrzeug, mit einem an der Karosserie des Fahrzeugs montierbaren Gehäuse (12), einem Spiegelteil (10) und einer Tragvorrichtung, die das Spiegelteil (10) in dem Gehäuse hält, dadurch gekennzeichnet, daß die Tragvorrichtung zumindest ein Tragglied (20, 22, 24, 26) enthält, welches an der Kante des Spiegelteils (10) befestigt ist und elastische Mittel (34, 36) aufweist, die in gleitendem Eingriff mit einer der Kante gegenüberliegenden Seitenwand des Gehäuses (12) stehen, und eine Verstellanordnung (44, 46) enthält, die von außerhalb des Gehäuses (12) einstellbar ist, um die Kraft zu verändern, die notwendig ist, eine Gleitbewegung des Traggliedes (22) relativ zu dem Gehäuse (12) zu veranlassen.

2. Spiegel nach Anspruch 1, dadurch gekennzeichnet, daß die Verstellanordnung einen halbstarren Streifen (40) mit einem darin ausgebildetem Längsschlitz (42) in Verbindung mit einer Schraube (44) aufweist, die sich durch ein Loch in dem Gehäuse (12) und durch den Schlitz (42) hindurch in ein in einem Klemmglied (46) befindliches Gewindeloch hinein erstreckt, um den Streifen (40) gegen die Innenfläche des Gehäuses (12) zu klemmen.

3. Spiegel nach Anspruch 1 oder 2, gekennzeichnet durch ein viereckiges Spiegelteil (10) und durch vier Tragglieder (20, 22, 24, 26), von denen jeweils eines einer der vier Ecken des Spiegelteils (10) benachbart angeordnet ist.

4. Spiegel nach Anspruch 1, 2 oder 3, dadurch gekennzeichnet, daß aus dem Mittelbereich der Innen-Rückseite des Gehäuses (12) ein Anlageglied (18) vorsteht, welches in Berührung mit der Rückseite des Spiegelteils (10) steht.

5. Spiegel nach Anspruch 1, 2 oder 3, dadurch gekennzeichnet, daß zentral auf der Innen-Rückseite des Gehäuses (12) ein Fernbedienungsmechanismus (60) montiert ist.

FIG. 1.

12

12

2

20

22

-10-

26

24

FIG. 2.

20　　　10　　　　　　　　18　　　　　　　22

12

14　　　　　　　　　　　　16

FIG. 3.

FIG. 4.

FIG. 5.